# EUROPÄISCHE PATENTSCHRIFT

(11) **EP 3 512 646 B1**
(45) Veröffentlichungstag und Bekanntmachung des Hinweises auf die Patenterteilung: **26.02.2020**
(21) Anmeldenummer: 17764590.0
(22) Anmeldetag: 11.09.2017
(51) Int. Cl.: B21B 45/00

(54) **VERFAHRBARER WÄRMEDÄMMWAGEN BEI DER METALLBEARBEITUNG**
MOVABLE HEAT-INSULATING CARRIAGE IN METAL PROCESSING
CHARIOT D'ISOLATION THERMIQUE MOBILE DESTINÉ AU TRAVAIL DES MÉTAUX

(30) Priorität: 16.09.2016 DE 102016217720
(43) Veröffentlichungstag der Anmeldung: 24.07.2019
(73) Patentinhaber: SMS Group GmbH, 40237 Düsseldorf (DE)
(72) Erfinder: PIEHLK, Andreas, 57072 Siegen (DE)
(74) Vertreter: Kross, Ulrich
(86) Internationale Anmeldenummer: PCT/EP2017/072675
(87) Internationale Veröffentlichungsnummer: WO 2018/050574

(56) Entgegenhaltungen:
- DE-T2- 69 407 253
- JP-A- H0 225 212
- JP-A- H11 172 325
- US-A- 4 343 168

## Beschreibung

### Technisches Gebiet

Die Erfindung betrifft eine Wärmedämmeinrichtung zur Verwendung in einer Bearbeitungslinie für ein entlang einer Bandförderrichtung zu transportierendes Metallband, vorzugsweise zur Verwendung in einem Walzwerk, wobei die Wärmedämmeinrichtung eine Wärmedämmhaube aufweist.

### Hintergrund der Erfindung

Bei der Metallbearbeitung, insbesondere in Vor- und Fertigstraßen im Warmwalzwerk werden stationäre oder verstellbare Wärmedämmhauben eingesetzt, um Temperaturverluste während des Transports des Metallbands zu verringern. Beispielsweise beschreibt die DE 1 452 102 A1 ein Verfahren und eine Vorrichtung zur Steuerung des Temperaturverlaufs eines Warmbandes beim Walzvorgang. Dazu sind Temperatur-Messeinrichtungen und bewegbare Reflektoreinheiten vorgesehen, die laut Anspruch 1 dieser Druckschrift aus dem Stand der Technik in Abhängigkeit der gemessenen Temperatur in Abschirmstellung über das Warmband bringbar sind. Weitere Anlagen zum Warmwalzen eines bandförmigen Walzguts mit einer wärmedämmenden Abdeckung sind in der EP 0 141 798 A2 und der US 4,343,168 A beschrieben.

Nachteilig an den herkömmlichen Wärmedämmhauben ist, dass diese trotz oder gerade wegen einer etwaigen Bewegbarkeit, die oft als Schwenkbewegung ausgeführt ist, Bauraum in der Fertigungslinie blockieren. Sie beeinträchtigen die Sicht auf den Walzbetrieb und erschweren die Wartung oder Störungsbeseitigung, da die entsprechenden Bereiche der Anlage durch die Wärmedämmhauben schwer zugänglich sind. Ferner ist der blockierte Raum nicht für andere Einrichtungen nutzbar.

### Darstellung der Erfindung

Eine Aufgabe der Erfindung besteht darin, eine Wärmedämmeinrichtung zur Verwendung in einer Bearbeitungslinie für ein entlang einer Bandförderrichtung zu transportierendes Metallband, vorzugsweise zur Verwendung in einem Walzwerk, anzugeben, die wenigstens einen der oben genannten technischen Nachteile überwindet. Insbesondere soll die Zuverlässigkeit und Flexibilität der Anlage zur Bearbeitung des Metallbands verbessert werden.

Gelöst wird die Aufgabe mit einer Wärmedämmeinrichtung mit den Merkmalen des Anspruchs 1, sowie einer Anlage mit den Merkmalen des Anspruchs 12. Vorteilhafte Weiterbildungen folgen aus den Unteransprüchen, der folgenden Darstellung der Erfindung sowie der Beschreibung bevorzugter Ausführungsbeispiele.

Die erfindungsgemäße Wärmedämmeinrichtung ist zur Verwendung in einer Bearbeitungslinie, auch als Fertigungslinie bezeichnet, für ein entlang einer Bandförderrichtung zu transportierendes Metallband, vorzugsweise zur Verwendung in einem Walzwerk, vorgesehen. Besonders bevorzugt ist sie in Vorund Fertigstraßen in Warmwalzwerken mit Endloswalzbetrieb und/oder Semi-Endlosbetrieb und/oder Batchwalzbetrieb einsetzbar. Die Wärmedämmeinrichtung weist einen Wärmedämmwagen auf, der eine Wärmedämmhaube hat, die zur Verringerung von Temperaturverlusten über oder allgemeiner an das Metallband bringbar ist. Die Wärmedämmhaube kann modulartig aufgebaut und erweiterbar sein, indem beispielsweise mehrere Wärmedämmelemente vorgesehen sind, deren Anzahl und/oder Aufbau sich an unterschiedliche Umgebungen, Materialen und/oder Betriebsbedingungen anpassen lassen. Die Wärmedämmhaube weist eine wärmedämmende Struktur auf. Beispielsweise können Materialien geringer Wärmeleitfähigkeit und/oder hoher Reflexionsfähigkeit bezüglich Wärmestrahlung verwendet werden. Die Wärmedämmung kann aber auch durch Vakuumwärmedämmung, geometrische oder strukturelle Eigenschaften der entsprechenden Elemente gewährleistet oder unterstützt werden. Dies gilt in analoger Weise für optionale oder bevorzugte wärmedämmende Elemente des Wärmedämmwagens, die weiter unten beschrieben sind.

Die Wärmedämmeinrichtung weist ferner ein Transportmittel auf, das einen Antrieb zum Verfahren des Wärmedämmwagens hat und so eingerichtet ist, dass der Wärmedämmwagen horizontal aus der Bearbeitungslinie ausfahrbar und in diese einfahrbar ist. Die Bezeichnung "horizontal" ist relativ zur Bearbeitungslinie zu sehen, d.h. der Wärmedämmwagen ist parallel zum Boden oder Fundament der Anlage (beispielsweise Walzwerk) oder des transportierten Metallbands verfahrbar. Vorzugsweise ist der Wärmedämmwagen horizontal zur Bandförderrichtung und entlang einer geraden Linie aus der Bearbeitungslinie ausfahrbar und in diese einfahrbar. Der Antrieb kann je nach Bauform Unterflur oder Oberflur vorgesehen sein. Die Verfahrbarkeit des Wärmedämmwagens muss nicht strikt horizontal zur Bandförderrichtung erfolgen und die Bewegungstrajektorie muss nicht strikt linear sein; wichtig ist, dass der Wärmedämmwagen problemlos aus der Bearbeitungslinie gefahren werden kann, ohne dass er im ausgefahrenen Zustand die Bearbeitungslinie blockiert. Dies ist insbesondere dann bei geringem Bauraum gewährleistet, wenn die Verfahrbarkeit entlang einer Linie stattfindet, die parallel zur Bandfläche, d.h. horizontal liegt.

Die Wärmedämmhaube wird somit nicht geschwenkt oder hebelartig verstellt, sondern die komplette Wärmedämmung in Gestalt des Wärmedämmwagens lässt sich aus der Bearbeitungslinie entfernen, wodurch eine andere Einrichtungen oder ein anderes Modul, wie etwa eine Induktionsheizung, an die entsprechende Stelle in die Bearbeitungslinie eingebracht werden kann. Dadurch lässt sich die Anlage ausgesprochen flexibel einstellen und nutzen. Ferner sind nach dem Ausfahren des Wärmedämmwagens die Sicht auf die Bearbeitungslinie und die Zugänglichkeit ausgezeichnet, wodurch die Wartung einfach durchgeführt und eine etwaige Störung schnell und zuverlässig behoben werden können.

Vorzugsweise weist das Transportmittel eine oder mehrere Schienen und/oder Leisten und/oder Rollen auf, wodurch ein Herausfahren oder Herausschieben der Wärmedämmung aus der Bearbeitungslinie auf mechanisch einfache Weise realisierbar ist. Zu diesem Zweck kann der Antrieb beispielsweise hydraulisch und/oder elektrisch und/oder pneumatisch und/oder als eine Kombination davon erfolgen.

Vorzugsweise ist entlang der Bearbeitungslinie ein Rollgang mit mehreren Rollen zum Transport des Metallbands vorgesehen, wobei die Wärmedämmeinrichtung so eingerichtet sein kann, dass der zugehörige Wärmedämmwagen in den Zwischenraum zwischen zwei benachbarten Rollen einfahrbar und daraus ausfahrbar ist. Damit wird der vorhandene Bauraum effektiv genutzt. Insbesondere ist der Bereich zwischen den Rollen somit leicht zugänglich und/oder anderweitig nutzbar.

Vorzugsweise weist der Wärmedämmwagen seitliche Wärmedämmungen auf, die zusammen mit der Wärmedämmhaube im Querschnitt senkrecht zur Bandförderrichtung ein U-förmiges Profil ausbilden. Alternativ oder zusätzlich kann der Wärmedämmwagen einen Unterboden aufweisen, welcher der Wärmedämmhaube so gegenüberliegt, dass er bei eingefahrenem Wärmedämmwagen unter dem Metallband angeordnet ist, während die Wärmedämmhaube über dem Metallband angeordnet ist, entlang der Schwerkraftrichtung gesehen. Vorzugsweise ist der Unterboden zur Verringerung von Temperaturverlusten wärmedämmend ausgebildet. Die Wärmedämmhaube, die seitlichen Wärmedämmungen und der Unterboden können auf diese Weise Wände eines Tunnels ausbilden, der einen Wärmedämmraum umgibt und durch den das Metallband im eingefahrenen Zustand des Wärmedämmwagens tritt. Durch die Formen, Strukturen und/oder Materialien der Tunnelwände (des vollständig oder teilweise umgebenden Tunnels) lässt sich die Wärmedämmung auf die gewünschten Erfordernisse einstellen. Die Bezeichnung "Tunnel" wird im vorliegenden Kontext auch dann verwendet, wenn der zu dämmende Bereich, d.h. der Wärmedämmraum, nicht vollständig von dämmenden Elementen umgeben ist. Beispielsweise könnte das Metallband zwischen einer Dämmhaube und einem Unterboden sandwichartig vorgesehen sein, ohne dass seitliche Dämmungen vorhanden sind; auch dieser Fall soll von der Bezeichnung "Tunnel" umfasst sein, da der Wärmedämmraum zumindest teilweise tunnelartig von Dämmelementen umgeben ist. Insbesondere können die Tunnelwände einstellbar, etwa verschiebbar und/oder zu öffnen und zu schließen, ausgebildet sein. Gemäß einer Ausführungsform bilden die Tunnelwände einen geschlossenen Tunnel aus, d.h. einen Tunnel, der bis auf Eintritts- und Austrittsöffnungen für das Metallband, dieses vollständig umgibt. In diesem Fall kann der Wärmedämmwagen nicht im Walzbetrieb oder allgemein Bearbeitungsbetrieb ein- und ausgefahren werden.

Gemäß einer bevorzugten Ausführungsform ist zum Einfahren und Ausfahren des Wärmedämmwagens ein seitlicher Schlitz vorgesehen, vorzugsweise zwischen einer seitlichen Wärmedämmung und dem Unterboden. Durch diesen Schlitz kann das Metallband in den Tunnel bzw. den Wärmedämmraum treten, wenn der Wärmedämmwagen in die Bearbeitungslinie gefahren wird. Umgekehrt kann das Metallband beim Herausfahren des Wärmedämmwagens ebenfalls durch den Schlitz treten, wodurch ein problemloses Ein- und Ausfahren möglich ist. Das Einfahren in den Bearbeitungsprozess, vorzugsweise Walzprozess, kann in diesem Fall vor dem Prozessbeginn oder während des Prozesses erfolgen. Analog kann der Wärmedämmwagen während des Prozesses in eine Warteposition außerhalb der Bearbeitungslinie gefahren werden.

Alternativ oder zusätzlich zum Schlitz kann ein Abschnitt des Tunnels so vorgesehen sein, dass dieser geöffnet und geschlossen werden kann. Insbesondere kann ein Wärmedämmelement beweglich gelagert sein. Das beweglich gelagerte Wärmedämmelement ist besonders bevorzugt eine seitliche Wärmedämmung, die schwenkbar gelagert ist. Dadurch lässt sich der Tunnel bzw. die Tunnelöffnung vergrößern, wodurch sich die Betriebssicherheit beispielsweise während eines Störfalls verbessern lässt. Das beweglich gelagerte Modul wird dabei zum Beispiel über das Metallband gezogen und vergrößert so die Öffnung auf das erforderliche Maß, um den Wärmedämmwagen über das Metallband herausziehen zu können.

Vorzugsweise weist der Unterboden Überleitmittel, besonders bevorzugt Überleitrippen und/oder Überleitrollen, auf, die mit dem Metallband zur Überleitung desselben im eingefahrenen Zustand des Wärmedämmwagens in Kontakt bringbar sind. Auf diese Weise wird der Wärmedämmwagen auf synergetische Weise zur Führung des Metallbands und/oder zum sicheren Transport desselben mitbenutzt, indem dieser neben seiner primären Funktion (Wärmeverlust während der Bearbeitung minimieren) als Überleittisch fungiert.

Vorzugsweise weist der Wärmedämmwagen eine begehbare Bühne auf, wodurch die Wartung nicht nur der Wärmedämmeinrichtung, sondern auch anderer Bereiche der Anlage vereinfacht werden kann. Alternativ oder zusätzlich kann der Wärmedämmwagen so weit verfahrbar sein, dass eine Wartung von Anlagenteilen, insbesondere stationären Anlagenteilen, erleichtert wird.

Die oben genannte Aufgabe der Erfindung wird ferner von einer Anlage zur Bearbeitung eines Metallbands, vorzugsweise einem Walzwerk, gelöst, die einen Rollgang mit Rollen zum Transport des Metallbands entlang einer Bandförderrichtung und eine oder mehrere der oben beschriebenen Wärmedämmeinrichtungen aufweist, deren Wärmedämmwagen in zugehörige Zwischenräume zwischen benachbarten Rollen des Rollgangs einfahrbar und daraus ausfahrbar sind.

Die Wärmedämmeinrichtung kann alternativ oder zusätzlich so eingerichtet sein, dass der zugehörige Wärmedämmwagen zwischen Walzgerüsten in einem Walzwerk ein- und ausgefahren werden kann. Eine weitere oder alternative Anwendung ist im Bereich zwischen einem Tunnelofen und einem, vorzugsweise dem ersten, Walzgerüst möglich.

Vorzugsweise sind ein oder mehrere verfahrbare Induktionsheizungen vorgesehen, die in die Bearbeitungslinie, vorzugsweise in von Wärmedämmwagen unbesetzte Zwischenräume, einfahrbar und daraus ausfahrbar sind. Auf diese Weise können Räume in der Bearbeitungslinie modular genutzt werden, sie können etwa zur Verbesserung der Zugänglichkeit freigeräumt und/oder je nach Betriebssituation mit einem Wärmedämmwagen und/oder einer Induktionsheizung bestückt werden.

Vorzugsweise sind mehrere Wärmedämmwagen einer oder mehrerer Wärmedämmeinrichtungen mittels eines Verbindungselements miteinander verbunden oder verbindbar, wodurch eine Gruppierung vorgenommen und ein gruppenweises Ein- und Ausfahren der Wärmedämmwagen ermöglicht wird.

Die hier beschriebene Wärmedämmeinrichtung kommt bevorzugt in Walzwerken, besonders bevorzugt in Vor- und/oder Fertigstraßen in Warmwalzwerken mit Endloswalzbetrieb und/oder Semi-Endlosbetrieb und/oder Batchwalzbetrieb zur Anwendung. Doch die Erfindung kann auch in anderen Anlagen eingesetzt werden, soweit sie die Metallbearbeitung, insbesondere Bearbeitung von Stahl und NE-Metallen, betreffen.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung der bevorzugten Ausführungsbeispiele erfolgt dabei unter Bezugnahme auf die begleitenden Zeichnungen.

### Kurze Beschreibung der Figuren

Die Figuren 1A bis 1C zeigen einen Wärmedämmwagen zur Verwendung in einem Walzwerk; die Figur 1A ist eine dreidimensionale Darstellung des Wärmedämmwagens; die Figuren 1B und 1C sind Schnittdarstellungen des Wärmedämmwagens im seitlich geschlossenen und geöffneten Zustand.

Die Figur 2 zeigt eine Anordnung mehrerer Wärmedämmwagen auf einem Grundrahmen entlang einer Bearbeitungslinie, dargestellt als dreidimensionale Ansicht von schräg oben.

Die Figur 3 zeigt eine Anordnung mehrerer Wärmedämmwagen in Kombination mit Induktionsheizungsmodulen auf einem Grundrahmen entlang einer Bearbeitungslinie, dargestellt als dreidimensionale Ansicht von schräg oben.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

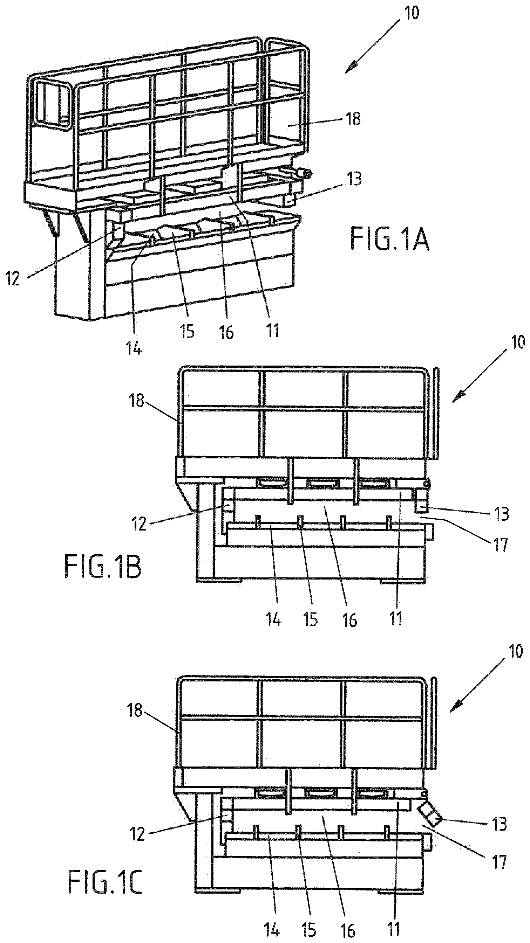

Die Figur 1A zeigt einen Wärmedämmwagen 10 gemäß einer beispielhaften Ausführungsform. Der Wärmedämmwagen 10 weist eine Wärmedämmhaube 11 und zwei seitliche Wärmedämmungen 12 und 13 auf, die jeweils eine wärmedämmende Struktur haben. Beispielsweise können diese wärmedämmenden Elemente (und ggf. weitere Elemente zur Wärmdämmung) aus Materialien geringer Wärmeleitfähigkeit und/oder hoher Reflexionsfähigkeit bezüglich Wärmestrahlung aufgebaut sein. Die Wärmedämmung kann aber auch durch Vakuumwärmedämmung, geometrische oder strukturelle Eigenschaften der entsprechenden Elemente gewährleistet oder unterstützt werden.

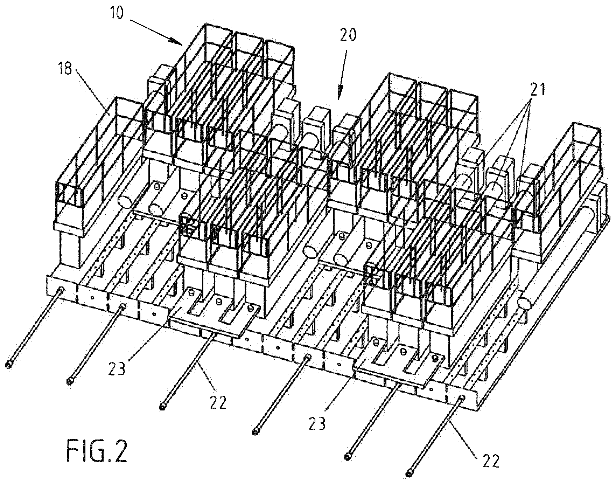

Die Wärmedämmhaube 11 und die beiden seitlichen Wärmedämmungen 12 und 13 umgeben zusammen mit einem Unterboden 14, der ebenfalls wärmedämmend ausgeführt sein kann, einen Wärmedämmraum 16, durch den das zu dämmende bandförmige Material (in den Figuren 1A bis 1C und 2 nicht gezeigt) tritt, das auch als Bandmaterial oder Metallband bezeichnet wird. Dazu sind Öffnungsschlitze vorgesehen, durch die das bandförmige Material in den Wärmedämmraum 16 des Wärmedämmwagens 10 ein- und austritt. Der Wärmedämmraum 16 mit den Öffnungsschlitzen bildet somit einen Tunnel für das bandförmige Material.

Der Unterboden 14 weist in der dargestellten Ausführungsform Überleitrippen 15 auf, die in den Wärmedämmraum 16 hineinragen und zum Transport des zu dämmenden Materials dienen, indem dieses auf den Überleitrippen 15 aufliegt. Alternativ oder zusätzlich können Überleitrollen vorgesehen sein, oder der Unterboden 14 kann auf andere Weise aufgebaut sein, solange das zu bearbeitende Material, etwa das gewalzte oder zu walzende Blech, problemlos durch den Wärmedämmraum 16 des Wärmedämmwagens 10 treten kann.

Aus den Schnittfiguren 1B und 1C geht besonders deutlich hervor, dass die Wärmedämmhaube 11 und/oder die seitlichen Wärmedämmungen 12 und 13 modulartig aufgebaut sein können, d.h. es können beispielsweise mehrere Wärmedämmelemente vorgesehen sein, die sich auf einfache Weise an unterschiedliche Umgebungen, Materialen und/oder Betriebsbedingungen anpassen lassen.

Die seitliche Wärmedämmung 13 ist schwenkbar vorgesehen, so dass sich der Wärmedämmraum 16 seitlich öffnen und schließen lässt. Das geht besonders gut aus einem Vergleich der Figuren 1B und 1C hervor, wobei die Figur 1B den geschlossenen und die Figur 1C den geöffneten Zustand zeigt. Diese Funktionalität lässt sich zur Öffnung des Wärmedämmraums 16 im Störfall und/oder zur Regulierung der Dämmleistung nutzen. Selbstverständliche kann alternativ oder zusätzlich die seitliche Wärmedämmung 12 schwenkbar vorgesehen sein. Allgemein gesprochen kann es nützlich sein, ein oder mehrere Wärmedämmseiten einstellbar (verschiebbar, schwenkbar usw.) vorzusehen, wodurch sich der Wärmedämmwagen 10 auf einfache Weise für unterschiedliche Arbeitsbedingungen einstellen lässt. Im vorliegenden Ausführungsbeispiel ist die seitliche Wärmedämmung 13 so vorgesehen, dass dieses beweglich gelagerte Modul über das bandförmige Material, etwa das Walzgut, gezogen werden kann, wodurch der Wärmedämmwagen 10 seitlich aus der Bearbeitungslinie herausgezogen werden kann. So lässt sich der Wärmedämmwagen 10 beispielsweise im Endloswalzbetrieb und/oder Batchwalzbetrieb ein- und ausfahren.

Bei der hier gezeigten beispielhaften Ausführungsform ist zusätzlich zur Schwenkbarkeit der seitlichen Wärmedämmung 13 stets ein seitlicher Schlitz 17 zwischen der seitlichen Wärmedämmung 13 und dem Unterboden 14 vorgesehen, um den Wärmedämmwagen 10 auch während des Bearbeitungsprozesses in die Bearbeitungslinie ein- und ausfahren zu können. Eine alternative Bauform ist der geschlossene Wärmedämmwagen 10, der nicht während des Band- bzw. Walzbetriebs ein- oder ausgefahren werden kann.

Der in den Figuren 1A bis 1C dargestellte Wärmedämmwagen 10 weist ferner eine begehbare Bühne 18 mit Sicherheitsgeländer auf, wodurch Wartungs-, Steuer- und/oder Kontrollarbeiten an der Wärmedämmeinrichtung und/oder der Anlage auf einfache und sichere Weise durchgeführt werden können.

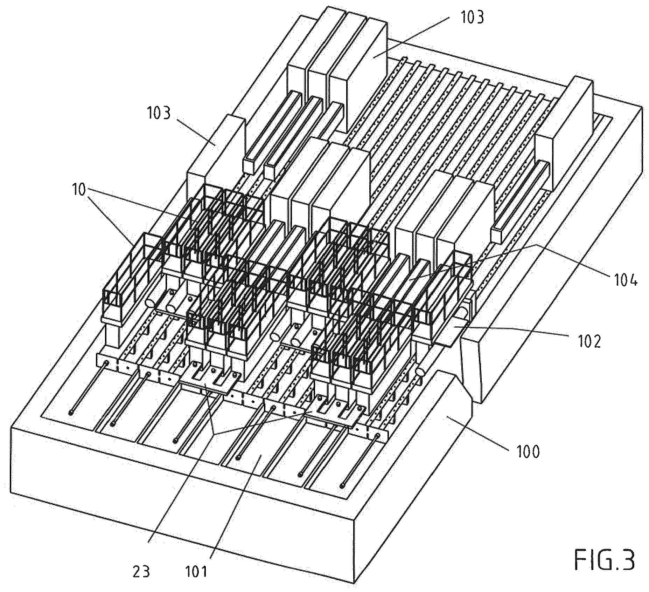

Die Einbettung mehrerer Wärmedämmwagen 10 in eine Bandbearbeitungsanlage, insbesondere deren Modularität und Verfahrbarkeit, geht aus den Figuren 2 und 3 hervor.

In der Figur 2 ist ein Rollgang 20 mit Rollen 21 gezeigt, die so hintereinander angeordnet sind, dass sie zum Transport eines Bandmaterials, etwa eines Endlosblechs, geeignet sind. Dazu können die Rollen 21 zumindest teilweise angetrieben sein. Die mehreren Wärmedämmwagen 10 lassen sich in den Rollgang 20, somit in die Bearbeitungslinie, einfahren und daraus ausfahren, insbesondere sind sie im eingefahrenen Zustand zwischen den Rollen 21 vorgesehen. Dazu können die Wärmedämmwagen 10 auf Schienen oder Leisten oder mittels Rollen mechanisch verfahren werden. Das Verfahren oder Verstellen der Wärmdämmwagen 10 kann auf mechanische Weise über Verfahrzylinder 22, die sich auf der Bedienungsseite befinden, erfolgen. Alternativ kann der Antrieb elektrisch, pneumatisch, hydraulisch, als eine Kombination davon oder auf andere Weise realisiert werden, solange ein zuverlässiges Ein- und Ausfahren der Wärmedämmwagen 10 gewährleistet ist. Das Einfahren erfolgt vorzugsweise von der Bedienungsseite aus, aber auch ein Einfahren von der Antriebsseite, die der Bedienungsseite relativ zur Bearbeitungslinie gegenüberliegt, ist denkbar.

Zwei oder mehr Wärmedämmwagen 10 lassen sich gruppieren, indem sie beispielsweise mit einem Verbindungselement 23 zur Gruppenbildung miteinander verbunden werden. Dadurch lassen sich die Wärmedämmwagen 10 je nach Bedarf einzeln oder in Gruppen verfahren.

Der Antrieb zum Ein- und Ausfahren der Wärmedämmwagen 10 ist unterflur möglich, wie es besonders deutlich aus der Figur 3 hervorgeht. Darin ist ein Fundament 100 gezeigt, in das Unterflurantriebe 101 zur verfahrbaren Betätigung der Wärmedämmwagen 10 (und ggf. weiterer Module) eingebaut sind. In der Figur 3 ist das Bandmaterial, d.h. beispielsweise das Walzgut, teilweise gezeigt und mit dem Bezugszeichen 102 bezeichnet. Die Walz- und/oder Transportrichtung ist in der Ansicht der Figuren 2 und 3 von links nach rechts.

Aus der Figur 3 geht ferner hervor, dass die Verfahrbarkeit der Wärmedämmwagen 10 den modularen Charakter der Anlage auf eine besondere Weise unterstützt. Denn neben den Wärmedämmwagen 10 können ein oder mehrere andere Module für das Bandmaterial 102 vorgesehen sein. Im Beispiel der Figur 3 sind Induktionsheizungen 103 vorgesehen, die sich alternativ zu den Wärmedämmwagen 10 in die Bearbeitungslinie fahren lassen, um das Bandmaterial 102 aktiv zu heizen. Alternativ können je nach Bedarf Lücken 104 in der Bearbeitungslinie freigelassen werden, an Stellen, an denen weder eine Dämmung noch ein Heizen erforderlich ist, oder aus Gründen der Wartung, Störungsbehebung usw..

Durch die hier dargestellten Wärmedämmwagen 10 lässt sich der Bauraum in einer Walzlinie oder allgemein Bandbearbeitungslinie effektiv nutzen. Durch die Verfahrbarkeit lässt ferner sich ein Freiraum für Wartungsarbeiten schaffen.

Die Wärmedämmwagen 10 und deren modulare Einbettung sind insbesondere geeignet zur Anwendung in Walzwerken, etwa in Vor- und Fertigstraßen in Warmwalzwerken mit Endloswalzbetrieb und/oder Batchwalzbetrieb. Die Wärmedämmwagen 10 dienen zur Vermeidung von Temperaturverlusten und können, sofern erforderlich, mit einer Überleitfunktion (hier exemplarisch durch Überleitrippen 15 realisiert) für das Walzgut ausgestattet sein. Die Wärmedämmwagen 10 können modular mit anderen Einrichtungen, wie etwa Induktionsheizungen 103, gekoppelt sein.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Wärmedämmwagen
- 11: Wärmedämmhaube
- 12: Seitliche Wärmedämmung (fest)
- 13: Seitliche Wärmedämmung (zum Öffnen und Schließen beweglich)
- 14: Unterboden
- 15: Überleitrippen
- 16: Wärmedämmraum
- 17: Seitlicher Schlitz
- 18: Bühne
- 20: Rollgang
- 21: Rollen
- 22: Verfahrzylinder
- 23: Verbindungselement zur Gruppenbildung
- 100: Fundament
- 101: Unterflurantrieb
- 102: Bandmaterial/Walzgut
- 103: Induktionsheizung
- 104: Lücke/Zwischenraum in der Bearbeitungslinie

## Patentansprüche

1. Wärmedämmeinrichtung zur Verwendung in einer Bearbeitungslinie für ein entlang einer Bandförderrichtung zu transportierendes Metallband (102), vorzugsweise zur Verwendung in einem Walzwerk, wobei die Wärmedämmeinrichtung aufweist:
mindestens einen Wärmedämmwagen (10), der eine Wärmedämmhaube (11) aufweist, die zur Verringerung von Temperaturverlusten über das Metallband (102) bringbar ist;
**gekennzeichnet durch**
ein Transportmittel, das einen Antrieb zum Verfahren des Wärmedämmwagens (10) aufweist und so eingerichtet ist, dass der Wärmedämmwagen (10) horizontal, vorzugsweise entlang einer geraden Linie, aus der Bearbeitungslinie ausfahrbar und in diese einfahrbar ist.

2. Wärmedämmeinrichtung nach Anspruch 1, **dadurch gekennzeichnet, dass** das Transportmittel eine oder mehrere Schienen und/oder Leisten und/oder Rollen aufweist.

3. Wärmedämmeinrichtung nach Anspruch 1 oder 2, **dadurch gekennzeichnet, dass** der Antrieb hydraulisch und/oder elektrisch und/oder pneumatisch und/oder als eine Kombination davon vorgesehen ist.

4. Wärmedämmeinrichtung nach einem der vorigen Ansprüche, **dadurch gekennzeichnet, dass** entlang der Bearbeitungslinie ein Rollgang (20) mit mehreren Rollen (21) zum Transport des Metallbands (102) vorgesehen ist, wobei die Wärmedämmeinrichtung so eingerichtet ist, dass der zugehörige Wärmedämmwagen (10) in den Zwischenraum zwischen zwei benachbarten Rollen (21) einfahrbar und daraus ausfahrbar ist.

5. Wärmedämmeinrichtung nach einem der vorigen Ansprüche, **dadurch gekennzeichnet, dass** der Wärmedämmwagen (10) seitliche Wärmedämmungen (12, 13) aufweist, die zusammen mit der Wärmedämmhaube (11) im Querschnitt senkrecht zur Bandförderrichtung ein U-förmiges Profil ausbilden.

6. Wärmedämmeinrichtung nach einem der vorigen Ansprüche, **dadurch gekennzeichnet, dass** der Wärmedämmwagen (10) einen Unterboden (14) aufweist, welcher der Wärmedämmhaube (11) so gegenüberliegt, dass er bei eingefahrenem Wärmedämmwagen (10) unter dem Metallband (102) angeordnet ist, vorzugsweise ist der Unterboden (14) zur Verringerung von Temperaturverlusten wärmedämmend ausgebildet.

7. Wärmedämmeinrichtung nach Anspruch 6, **dadurch gekennzeichnet, dass** der Unterboden (14) Überleitmittel, vorzugsweise Überleitrippen (15) und/oder Überleitrollen, aufweist, die mit dem Metallband (102) zur Überleitung desselben im eingefahrenen Zustand des Wärmedämmwagens (10) in Kontakt bringbar sind.

8. Wärmedämmeinrichtung nach Anspruch 5 und 6 oder 7, **dadurch gekennzeichnet, dass** die Wärmedämmhaube (11), die seitlichen Wärmedämmungen (12, 13) und der Unterboden (14) Wände eines Tunnels ausbilden, der einen Wärmedämmraum (16) umgibt und durch den das Metallband (102) im eingefahrenen Zustand des Wärmedämmwagens (10) tritt.

9. Wärmedämmeinrichtung nach Anspruch 8, **dadurch gekennzeichnet, dass** der Tunnel einen seitlichen Schlitz (17) aufweist und/oder wenigstens ein Abschnitt der Tunnelwände so vorgesehen ist, dass dieser geöffnet und geschlossen werden kann.

10. Wärmedämmeinrichtung nach einem der vorigen Ansprüche und Anspruch 5, **dadurch gekennzeichnet, dass** wenigstens eine seitliche Wärmedämmung (13) schwenkbar gelagert ist.

11. Wärmedämmeinrichtung nach einem der vorigen Ansprüche, **dadurch gekennzeichnet, dass** der Wärmedämmwagen (10) eine begehbare Bühne (18) aufweist.

12. Anlage zur Bearbeitung eines Metallbands (102), vorzugsweise Walzwerk, die einen Rollgang (20) mit Rollen (21) zum Transport des Metallbands (102) entlang einer Bandförderrichtung und eine oder mehrere Wärmedämmeinrichtungen nach einem der vorigen Ansprüche aufweist, deren Wärmedämmwagen (10) vorzugsweise in zugehörige Zwischenräume (104) zwischen benachbarten Rollen (21) des Rollgangs (20) einfahrbar und daraus ausfahrbar sind.

13. Anlage nach Anspruch 12, **dadurch gekennzeichnet, dass** ein oder mehrere verfahrbare Induktionsheizungen (103) vorgesehen sind, die in die Bearbeitungslinie, vorzugsweise in von Wärmedämmwagen (10) unbesetzte Zwischenräume (104), einfahrbar und daraus ausfahrbar sind.

14. Anlage nach Anspruch 12 oder 13, **dadurch gekennzeichnet, dass** mehrere Wärmedämmwagen (10) einer oder mehrerer Wärmedämmeinrichtungen mittels eines Verbindungselements (23) miteinander verbunden oder verbindbar sind, wodurch eine Gruppierung vorgenommen und ein gruppenweises Ein-und Ausfahren der Wärmedämmwagen (10) ermöglicht wird.

## Claims

1. Heat insulating equipment for use in a processing line for a metal strip (102) to be transported along a strip conveying direction, preferably for use in a rolling mill, wherein the heat insulating equipment comprises:
at least one heat insulating carriage (10), which comprises a heat insulating hood (11) which can be brought over the metal strip (102) for reducing temperature losses,
**characterised by**
transport means which comprises a drive for moving the heat insulating carriage (10) and which is so arranged that the heat insulating carriage (10) is movable horizontally, preferably along a straight line, out of the processing line and into this.

2. Heat insulating equipment according to claim 1, **characterised in that** the transport means comprises one or more rails and/or strips and/or rollers.

3. Heat insulating equipment according to claim 1 or 2, **characterised in that** the drive is hydraulic and/or electric and/or pneumatic and/or is provided as a combination thereof.

4. Heat insulating equipment according to any one of the preceding claims, **characterised in that** a roller path (20) with a plurality of rollers (21) for transport of the metal strip (102) is provided along the processing line, wherein the heat insulating equipment is so arranged that the associated heat insulating carriage (10) is movable into the intermediate space between two adjacent rollers (21) and movable out therefrom.

5. Heat insulating equipment according to any one of the preceding claims, **characterised in that** the heat insulating carriage (10) comprises lateral heat insulations (12, 13) which together with the heat insulating hood (11) form a U-shaped profile member in cross-section perpendicular to the strip conveying direction.

6. Heat insulating equipment according to any one of the preceding claims, **characterised in that** the heat insulating carriage (10) comprises a substrate (14) which is opposite the heat insulating hood (11) so that it is arranged under the metal strip (102) when the heat insulating carriage (10) is moved in, the substrate (14) preferably being constructed to be heat insulating so as to reduce temperature losses.

7. Heat insulating equipment according to claim 6, **characterised in that** the substrate (14) comprises running-over means, preferably running-over ribs (15) and/or running-over rollers, which in the moved-in state of the heat insulating carriage (10) can be brought into contact with the metal strip (102) for running over the strip.

8. Heat insulating equipment according to claim 5 and 6 or 7, **characterised in that** the heat insulating hood (11), the lateral heat insulations (12, 13) and the substrate (14) form walls of a tunnel which surrounds a heat insulating space (16) and through which the metal strip (102) passes in the moved-in state of the heat insulating carriage (10).

9. Heat insulating equipment according to claim 8, **characterised in that** the tunnel has a lateral slot (17) and/or at least one section of the tunnel walls is provided so that this can be opened and closed.

10. Heat insulating equipment according to claim 5 and another one of the preceding claims, **characterised in that** at least one lateral heat insulation (13) is mounted to be pivotable.

11. Heat insulating equipment according to any one of the preceding claims, **characterised in that** the heat insulating carriage (10) comprises a platform (18) which can be walked on.

12. Plant for processing a metal strip (102), preferably rolling mill, which comprises a roller path (20) with rollers (21) for transport of the metal strip (102) along a strip conveying direction and one or more items of heat insulating equipment according to any one of the preceding claims, the heat insulating carriages (10) of which are preferably movable into associated intermediate spaces (104) between adjacent rollers (21) of the roller path (20) and movable out therefrom.

13. Plant according to claim 12, **characterised in that** one or more movable induction heating means (103) are provided, the heating means being movable into the processing line, preferably into intermediate spaces (104) not occupied by heat insulating carriages (10), and movable out therefrom.

14. Plant according to claim 12 or 13, **characterised in that** several heat insulating carriages (10) of one or more items of thermal insulating equipment are connected or connectible together by means of a connecting element (23), whereby a grouping is undertaken and group movement in and out of the heat insulating carriages (10) is made possible.

## Revendications

1. Mécanisme procurant une isolation thermique pour son utilisation dans une ligne de traitement destinée à une bande métallique (102) qui doit être transportée le long d'une direction de transport de bande, de préférence pour son utilisation dans un laminoir ; dans lequel le mécanisme procurant une isolation thermique présente :
au moins un chariot calorifuge (10) qui présente un capot calorifuge (11) qui peut être amené par-dessus la bande métallique (102) à des fins de réduction des pertes de température ;
**caractérisé par**
un moyen de transport qui présente une commande pour le déplacement du chariot calorifuge (10) et qui est conçu d'une manière telle que le chariot calorifuge (10) peut quitter à l'horizontale, de préférence le long d'une ligne droite, la ligne de traitement et peut intégrer cette dernière.

2. Mécanisme procurant une isolation thermique selon la revendication 1, **caractérisé en ce que** le moyen de transport présente un ou plusieurs rails et/ou une ou plusieurs nervures et/ou un ou plusieurs rouleaux.

3. Mécanisme procurant une isolation thermique selon la revendication 1 ou 2, **caractérisé en ce que** la commande est prévue par voie hydraulique et/ou par voie électrique et/ou par voie pneumatique et/ou sous la forme d'une combinaison desdites voies.

4. Mécanisme procurant une isolation thermique selon l'une quelconque des revendications précédentes, **caractérisé en ce que** l'on prévoit, le long de la ligne de traitement, un transporteur à rouleaux (20) comprenant plusieurs rouleaux (21) destinés au transport de la bande métallique (102) ; dans lequel le mécanisme procurant une isolation thermique est conçu d'une manière telle que le chariot calorifuge (10) qui lui est attribué peut venir s'insérer dans l'espace intermédiaire ménagé entre deux rouleaux voisins (21) et peut en sortir.

5. Mécanisme procurant une isolation thermique selon l'une quelconque des revendications précédentes, **caractérisé en ce que** le chariot calorifuge (10) présente des isolations thermiques latérales (12, 13) qui, de manière conjointe avec le capot calorifuge (11), forment, en section transversale, perpendiculairement à la direction de transport de la bande, un profilé en forme de U.

6. Mécanisme procurant une isolation thermique selon l'une quelconque des revendications précédentes, **caractérisé en ce que** le chariot calorifuge (10) présente une partie inférieure de base (14) qui est opposée au capot calorifuge (11) d'une manière telle qu'elle vient se disposer, après l'insertion du chariot calorifuge (10), en dessous de la bande métallique (102) ; de préférence, la partie inférieure de base (14) est réalisée de manière à procurer une isolation thermique dans le but de réduire les pertes de température.

7. Mécanisme procurant une isolation thermique selon la revendication 6, **caractérisé en ce que** la partie inférieure de base (14) présente des moyens de transfert, de préférence des nervures de transfert (15) et/ou des rouleaux de transfert qui peuvent être amenés en contact avec la bande métallique (102) à des fins de transfert de cette dernière à l'état inséré du chariot calorifuge (10).

8. Mécanisme procurant une isolation thermique selon les revendications 5 et 6 ou 7, **caractérisé en ce que** le capot calorifuge (11), les isolations thermiques latérales (12, 13) et la partie inférieure de base (14) forment des parois d'un tunnel qui entoure un espace (16) procurant une isolation thermique et que traverse la bande métallique (102) à l'état inséré du chariot calorifuge (10).

9. Mécanisme procurant une isolation thermique selon la revendication 8, **caractérisé en ce que** le tunnel présente une fente latérale (17) et/ou au moins un tronçon des parois du tunnel est prévu d'une manière telle que l'on puisse l'ouvrir et le fermer.

10. Mécanisme procurant une isolation thermique selon l'une quelconque des revendications précédentes et selon la revendication 5, **caractérisé en ce qu'**au moins une isolation thermique latérale (13) est montée de manière à pouvoir pivoter.

11. Mécanisme procurant une isolation thermique selon l'une quelconque des revendications précédentes, **caractérisé en ce que** le chariot calorifuge (10) présente une plate-forme praticable (18).

12. Installation destinée au traitement d'une bande métallique (102), de préférence un laminoir, qui présente un transporteur à rouleaux (20) comprenant des rouleaux (21) pour le transport de la bande métallique (102) le long d'une direction de transport de la bande ainsi qu'un ou plusieurs mécanismes procurant une isolation thermique selon l'une quelconque des revendications précédentes, dont les chariots calorifuges (10) peuvent venir s'insérer de préférence dans des espaces intermédiaires correspondants (104) entre des rouleaux voisins (21) du transporteur à rouleaux (20) et en ressortir.

13. Installation selon la revendication 12, **caractérisée en ce qu'**on prévoit un ou plusieurs chauffages mobiles à induction (103), qui peuvent venir s'insérer dans la ligne de traitement, de préférence dans des espaces intermédiaires (104) inoccupés de chariots calorifuges (10), et en ressortir.

14. Installation selon la revendication 12 ou 13, **caractérisée en ce que** plusieurs chariots calorifuges (10) d'un ou de plusieurs mécanismes procurant une isolation thermique sont reliés les uns aux autres ou peuvent être reliés les uns aux autres au moyen d'un élément de liaison (23), d'une manière telle que l'on obtient un groupement et que l'on permet une entrée et une sortie des chariots calorifuges (10) en groupes.
